# FASCICULE DE BREVET EUROPEEN

(11) **EP 3 667 357 B1**
(45) Date de publication et mention de la délivrance du brevet: **23.11.2022**
(21) Numéro de dépôt: 19213551.5
(22) Date de dépôt: 04.12.2019
(51) Int. Cl.: G01S 7/02, G01S 7/36, G01S 13/20, G01S 13/26, G01S 13/30, G01S 13/28, G01S 13/02

(54) **PROCEDE DE CONFUSION DE LA SIGNATURE ELECTRONIQUE EMISE PAR UN RADAR, ET DISPOSITIF D'EMISSION/RECEPTION ADAPTE POUR SA MISE EN OEUVRE**
VERFAHREN ZUR STÖRUNG DER VON EINEM RADAR GESENDETEN ELEKTRONISCHEN SIGNATUR, UND ENTSPRECHEND ANGEPASSTE SENDE-/EMPFANGSVORRICHTUNG FÜR DIE UMSETZUNG DIESES VERFAHRENS
METHOD FOR SCRAMBLING OF THE ELECTRONIC SIGNATURE TRANSMITTED BY A RADAR, AND TRANSMITTING/RECEIVING DEVICE SUITABLE FOR IMPLEMENTING SAME

(30) Priorité: 11.12.2018 FR 1872651
(43) Date de publication de la demande: 17.06.2020
(60) Demande divisionnaire: 20175581.6
(73) Titulaire: Thales, 92400 Courbevoie (FR)
(72) Inventeur: CORNIC, Pascal, 29238 Brest (FR); GARREC, Patrick, 33701 Merignac Cedex (FR); POREZ, Nicolas, 33700 Merignac (FR)
(74) Mandataire: Atout PI Laplace

(56) Documents cités:
- WO-A1-2017/021307
- US-A- 4 472 717
- JIN TAO ET AL: "Anti-Full Polarization Active Jamming", INDUSTRIAL ELECTRONICS AND APPLICATIONS, 2007. ICIEA 2007. 2ND IEEE CO NFERENCE ON, IEEE, PI, 1 mai 2007 (2007-05-01), pages 2718-2722, XP031137842, ISBN: 978-1-4244-0736-1
- ANONYMOUS: "Analysis of IPAR Field Performance", MICROWAVE CONFERENCE, 1983. 13TH EUROPEAN, IEEE, PISCATAWAY, NJ, USA, 3 septembre 1983 (1983-09-03), pages 133-141, XP031602499,
- PAN JIAN ET AL: "Polarization changing technique in macrocosm and it's application to radar", CHINESE JOURNAL OF SYSTEMS ENGINEERING AND ELECTRONICS, SECOND ACADEMY MINISTRY OF AERO-SPACE INDUSTRY, BEIJING, CN, vol. 15, no. 4, 1 décembre 2004 (2004-12-01), pages 447-452, XP011376758, ISSN: 1004-4132, DOI: 10.1109/JSEE.2004.6071509

## Description

L'invention porte sur un dispositif d'émission/réception adapté à mettre en œuvre un procédé de confusion de la signature électronique émise par un radar. Elle s'applique en particulier au domaine de la guerre électronique.

Dans un contexte de guerre électronique, l'identification des signaux émis par les radars revêt une importance stratégique. Ainsi, une fois détecté et reconnu par un système d'écoute, un radar peut être considéré comme un ami ou un ennemi, voire comme une menace à neutraliser ou non.

Les systèmes d'écoute des signaux émis par les radars utilisent, pour identifier les signaux reçus, un certain nombre de mesures de paramètres qui caractérisent ces signaux. Typiquement, ces paramètres incluent notamment la fréquence d'émission, la longueur d'impulsion, la fréquence de répétition, la période de rotation d'antenne. L'ensemble de ces paramètres constitue la signature électronique d'un radar, également appelée forme d'onde. A partir de l'estimation de ces différents paramètres, il est alors possible de déterminer le type de radar en présence, par exemple s'il s'agit d'un radar sol, d'un radar maritime, d'un radar aéroporté, voire même le type de porteur. Les systèmes d'écoute font pour cela appel à des bases données spécialisées, qui sont chargées au départ de la mission, en fonction de l'endroit où ils opèrent, et des conditions d'utilisation, et qui répertorient un ensemble d'émetteurs, notamment des radars, avec leurs paramètres associés.

La capacité, pour un radar, à se faire passer pour un équipement qui ne correspond pas à sa vraie identité (un autre type de radar, un émetteur de télécommunications civiles, voire du bruit), ou à faire croire qu'il opère dans un mode d'opération différent du mode d'opération effectif (par exemple faire croire qu'il est en mode veille alors qu'il est en mode poursuite) lui procure un avantage par rapport à ses adversaires. Cette technique est appelée de façon courante et indifférente confusion, déception, ou encore leurrage.

Habituellement, un radar dispose de peu de moyens pour déguiser son identité ou masquer le mode dans lequel il opère. En effet, toute modification significative de sa forme d'onde ou de son balayage antennaire se traduirait par une dégradation importante des performances opérationnelles, en termes de sensibilité de détection, de discrimination et de localisation des cibles d'intérêt. Par exemple, il est difficile de changer de fréquence d'émission, dans une plage suffisamment large pour leurrer un système d'écoute. Il n'est également pas envisageable de modifier les longueurs d'impulsion ou de répétition du radar car cela aurait un impact sur son mode de fonctionnement.

Le document *"*Anti-Full Polarization Active Jamming" (Jin Tao et al., ICIEA 2007, 2nd IEEE Conférence on Industrial Electronics and Applications, 2007), publié le 1er mai 2007, décrit un procédé de codage de polarisation, qui effectue une modulation de polarisation d'une impulsion à l'autre.

Les documents *"*Analysis of IPAR Field Performance" (Microwave Conference, 1983) et US 4 472 717 A décrivent des radars agiles à polarisation intra-impulsion, destinés à améliorer la capacité de détection.

Le document *"*Polarization changing technique in macrocosm and it's application to radar" (Pan Jian et al., Chinese Journal of Systems Engineering and Electronics, Second Academy Ministry of Aero-Space Industry, Beijing, vol. 15, no. 4) décrit un radar PCM (Polarization Changing in Macrocosm), qui peut être utilisé à des fins de contre-mesure.

L'invention vise à fournir un dispositif d'émission/réception configuré pour mettre en œuvre un procédé de confusion de la signature électronique émise par un radar, qui n'altère toutefois pas les performances opérationnelles dudit radar.

Un objet de l'invention est donc un dispositif d'émission/réception configuré pour mettre en œuvre un procédé de confusion de la signature électronique d'un signal émis par un radar, comprenant la génération par le radar d'au moins une impulsion, le procédé comprenant une étape de modulation, dans l'impulsion, de la polarisation du signal émis, selon deux polarisations orthogonales ou opposées, la modulation de la polarisation étant réalisée selon un code de modulation prédéterminé caractérisé en ce que le dispositif d'émission/réception comprend une unique voie de réception adaptée à une polarisation rectiligne correspondant à une des deux composantes de polarisation de la polarisation du signal émis.

Avantageusement, le code de modulation est configuré pour faire passer alternativement la polarisation de circulaire gauche à circulaire droite.

En variante, le code de modulation est configuré pour faire passer alternativement la polarisation de linéaire oblique gauche à linéaire oblique droite.

Avantageusement, le code de modulation comprend, à un moment près, autant de moments pour les deux polarisations orthogonales ou opposées.

Avantageusement, le code de modulation est un code de Barker à sept moments.

Avantageusement, le dispositif est configuré pour générer une pluralité d'impulsions, le code de modulation étant inversé temporellement d'une impulsion à la suivante.

L'invention se rapporte enfin à une antenne comportant une pluralité de dispositifs précités, l'antenne étant du type à balayage électronique, ainsi qu'à un procédé de confusion de la signature électronique d'un signal émis par un radar, caractérisé par l'utilisation du dispositif précité.

D'autres caractéristiques, détails et avantages de l'invention ressortiront à la lecture de la description faite en référence aux dessins annexés donnés à titre d'exemple et qui représentent, respectivement :
[Fig.1] la figure 1, une illustration de l'alimentation d'un élément rayonnant selon deux accès d'excitation ;
[Fig.2] la figure 2, une illustration de l'alimentation d'un élément rayonnant selon deux paires d'accès d'excitation ;
[Fig.3] la figure 3, quatre chronogrammes représentant l'amplitude de l'enveloppe du signal émis par le radar, la modulation de la phase de deux composantes orthogonales du champ électrique, l'amplitude de l'enveloppe du signal reçu par le dispositif d'écoute, et l'amplitude de l'enveloppe du signal restitué par le dispositif d'écoute, lorsque le procédé alterne polarisation circulaire gauche et polarisation circulaire droite ;
[Fig.4] la figure 4, quatre chronogrammes représentant l'amplitude de l'enveloppe du signal émis par le radar, la modulation de la phase de deux composantes orthogonales du champ électrique, l'amplitude de l'enveloppe du signal reçu par le dispositif d'écoute, et l'amplitude de l'enveloppe du signal restitué par le dispositif d'écoute, lorsque le procédé alterne polarisation oblique gauche et polarisation oblique droite ;
[Fig.5] la figure 5, une représentation du circuit de réception du dispositif d'émission/réception, selon un mode de réalisation utilisant deux voies de réception, qui ne fait pas partie de l'invention mais fourni à titre d'illustration ;
[Fig.6] la figure 6, une représentation du corrélateur employé dans le dispositif d'émission/réception, selon un mode de réalisation utilisant deux voies de réception, qui ne fait pas partie de l'invention mais fourni à titre d'illustration.

Les inventeurs ont pu constater que les systèmes d'écoute, pour des raisons de complexité et de coût, présentent un gain d'antenne différent selon la polarisation des ondes reçues, ce qui traduit par une sensibilité variable selon cette polarisation. Les systèmes d'écoute disponibles sur le marché sont pourvus d'une antenne adaptée à une polarisation particulière dans laquelle ils sont censés capter le maximum de polarisation possible. Par exemple, ils peuvent être adaptés à une polarisation oblique (gauche ou droite) ou circulaire (gauche ou droite), afin de capter, avec éventuellement une perte de 3 dB, les polarisations verticale et horizontale. Les systèmes d'écoute ne sont jamais adaptés à une polarisation purement verticale ou purement horizontale, car, dans ce cas, ils ne pourraient rien détecter du tout lorsque l'émission se fait dans une polarisation désadaptée.

Typiquement, il est fréquent d'utiliser dans ces systèmes une antenne adaptée à la polarisation circulaire lévogyre (gauche) ou dextrogyre (droite). Par contre, une telle antenne est très mal adaptée à la réception d'une polarisation circulaire opposée à la polarisation pour laquelle elle est adaptée. Dans une telle configuration, la perte peut atteindre 20 dB.

De la même façon, il est fréquent d'utiliser dans ces systèmes des antennes adaptées à la polarisation oblique gauche ou droite. La polarisation oblique, à savoir inclinée à 45° par rapport aux polarisations verticale et horizontale, et est également appelée polarisation « slant ». Une telle antenne est en effet capable de recevoir une polarisation horizontale ou verticale, avec une perte de 3 dB, ou une polarisation oblique conforme à celle pour laquelle elle est adaptée, à savoir gauche ou droite. Elle est en revanche très mal adaptée à la réception d'une polarisation oblique orthogonale à celle pour laquelle elle est adaptée. Dans une telle configuration, la perte peut là aussi atteindre 20 dB.

Le procédé décrit et le dispositif selon l'invention reposent sur cette constatation.

Les radars à agilité de polarisation sont particulièrement adaptés à la mise en œuvre du procédé décrit. Ils sont capables d'émettre et de recevoir à la demande dans tous les types de polarisation, qu'elles soient rectilignes, inclinées ou non, elliptiques ou circulaires, en rotation droite ou gauche. Plus particulièrement, les radars à antenne active, dont les éléments rayonnants élémentaires possèdent plusieurs accès d'excitation, sont bien adaptés à la mise en œuvre du procédé décrit. Dans ces radars, le champ électrique est excité selon deux orientations orthogonales, dénommées Ex et Ey.

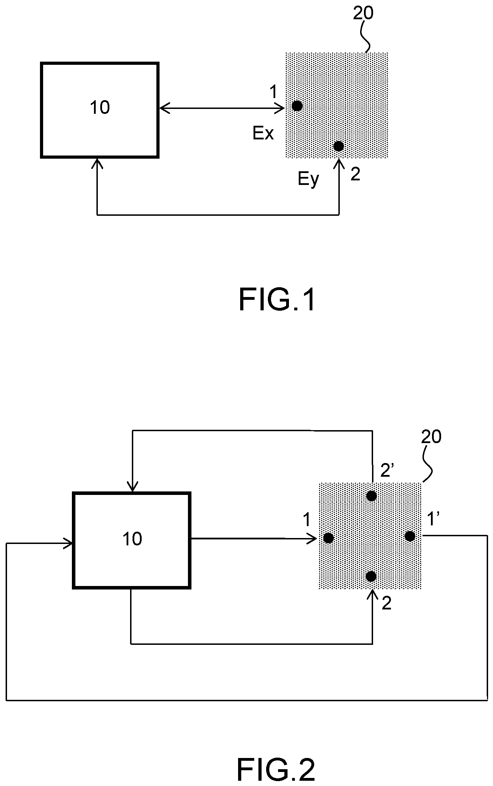

Dans ces conditions, l'orientation du champ électrique et la polarisation de l'onde résultante peuvent être commandées de façon quelconque avec un contrôle individuel de la phase et de l'amplitude des signaux d'excitation des éléments rayonnants.. Les éléments rayonnants du radar sont connectés de façon individuelle ou par groupement à un module actif radio fréquence d'émission réception, appelé TR module, qui contrôle l'amplitude, la phase et la polarisation des signaux émis et reçus selon deux polarisations orthogonales. La figure 1 illustre schématiquement un élément rayonnant 20 connecté à un module actif radio fréquence d'émission réception 10, avec la capacité de rayonner et de recevoir dans toutes les polarisations, grâce à deux modes d'excitation en champ électrique orthogonaux et indépendants, Ex et Ey. Le champ électrique Ex est excité au niveau de l'accès d'excitation 1, et le champ Ey au niveau de l'accès d'excitation 2.

Il est ainsi possible d'obtenir :
- une polarisation linéaire horizontale, en réalisant une excitation par l'accès 1 ;
- une polarisation linéaire verticale, en réalisant une excitation par l'accès 2 ;
- une polarisation inclinée de 45° à droite (oblique droite), en réalisant une excitation en phase et de même amplitude par les accès 1 et 2 ;
- une polarisation inclinée de 45° à gauche (oblique gauche), en réalisant une excitation en opposition de phase et de même amplitude par les accès 1 et 2 ;
- une polarisation circulaire gauche, en réalisant une excitation de même amplitude mais déphasée de +90° entre les accès 2 et 1 ;
- une polarisation circulaire droite, en réalisant une excitation de même amplitude mais déphasée de -90° entre les accès 2 et 1.

Un exemple de dispositif d'émission/réception permettant d'obtenir une agilité de polarisation est décrit dans la demande de brevet WO 2017/021307 A1, qui divulgue un élément rayonnant excité non pas par deux accès d'excitation, mais par deux paires d'accès d'excitation 1-1' et 2-2'. La figure 2 illustre schématiquement l'alimentation par deux paires d'accès d'excitation. Les deux accès 1-1' et 2-2' d'une paire sont disposés symétriquement par rapport à un point central de l'élément rayonnant. Cela permet d'effectuer une excitation en mode différentiel.

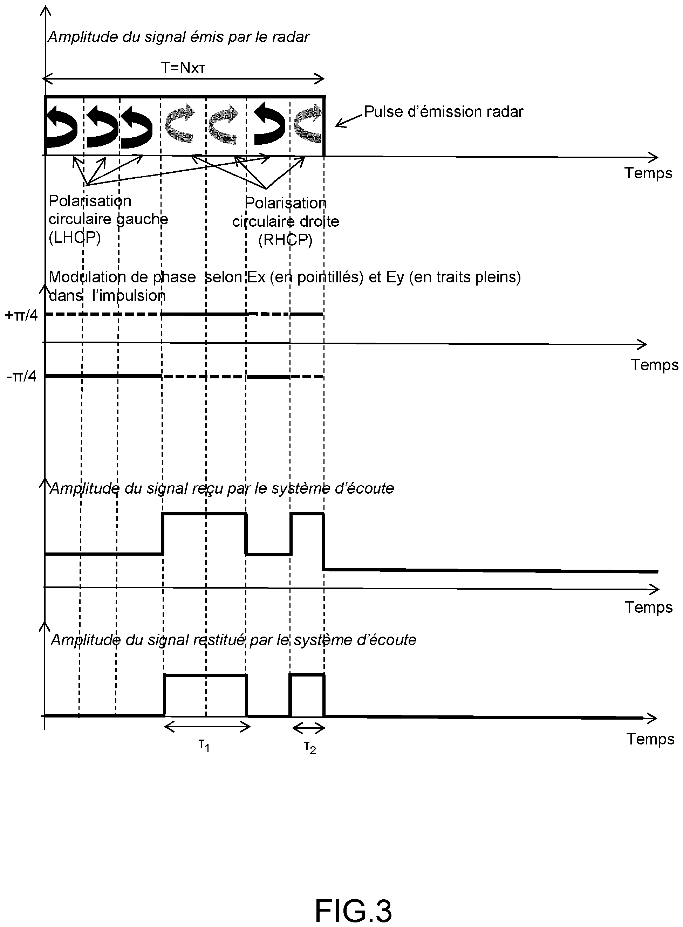

Dans le chronogramme situé en figure 3 et représentant l'amplitude de l'enveloppe du signal émis par le radar, une seule impulsion est représentée sur la figure ; en réalité, le radar peut générer une séquence comprenant une pluralité d'impulsions, sans que cela ne modifie le procédé décrit. Au sein d'une même impulsion, une modulation de la polarisation du signal émis est effectuée, selon deux polarisations opposées, en l'occurrence circulaire gauche et circulaire droite. Par polarisations « opposées », l'homme du métier comprend qu'il s'agit de sens opposés de polarisation : en polarisation circulaire gauche, la rotation se fait dans le sens anti-horaire, et en polarisation circulaire droite, la rotation se fait dans le sens horaire.

La modulation de la polarisation est effectuée selon un code de modulation prédéterminé. L'impulsion de durée T peut se décomposer en N moments de durée τ.

La modulation de polarisation est effectuée en faisant varier la modulation de phase des composantes rectilignes Ex et Ey, générées dans l'élément rayonnant au niveau des accès d'excitation correspondants. En polarisation circulaire gauche, la composante rectiligne Ex est par exemple déphasée de +π/4, et la composante rectiligne Ey est inversement déphasée de -π/4. Le déphasage entre les deux composantes est donc bien de 90°. En polarisation circulaire droite, la composante rectiligne Ex est déphasée de -π/4, et la composante rectiligne Ey est déphasée de +π/4. Le déphasage entre les deux composantes est donc bien de -90°.

Le chronogramme situé en figure 3 et représentant l'amplitude de l'enveloppe du signal reçu par le système d'écoute fait apparaître une adaptation du système d'écoute pour la polarisation circulaire droite, et une désadaptation pour la polarisation circulaire gauche. Ainsi, pour les trois premiers moments, et pour le sixième moment, l'amplitude du signal reçu est fortement réduite. Pour les quatrième, cinquième et septième moments, l'amplitude du signal est conforme aux niveaux d'amplitude attendus. Le système d'écoute considère donc comme étant du bruit, dû par exemple à des réflexions de l'environnement extérieur, tous les signaux adjacents aux impulsions reçues.

Comme l'illustre le chronogramme situé en figure 3 et représentant l'amplitude de l'enveloppe du signal restitué par le système d'écoute, le système d'écoute, après seuillage, ne tient plus compte que des impulsions de durées τ₁ et τ₂. La base de données peut recenser des émetteurs dont l'impulsion caractéristique est de durée τ₁, ou bien des émetteurs dont l'impulsion caractéristique est de durée τ₂, ou bien encore des émetteurs dont l'impulsion caractéristique est une séquence comprenant une première impulsion de durée τ₁ et une impulsion de durée τ₂. Il y a alors confusion du système d'écoute dans la mesure où il n'est pas en mesure de déterminer la signature électronique réelle du radar.

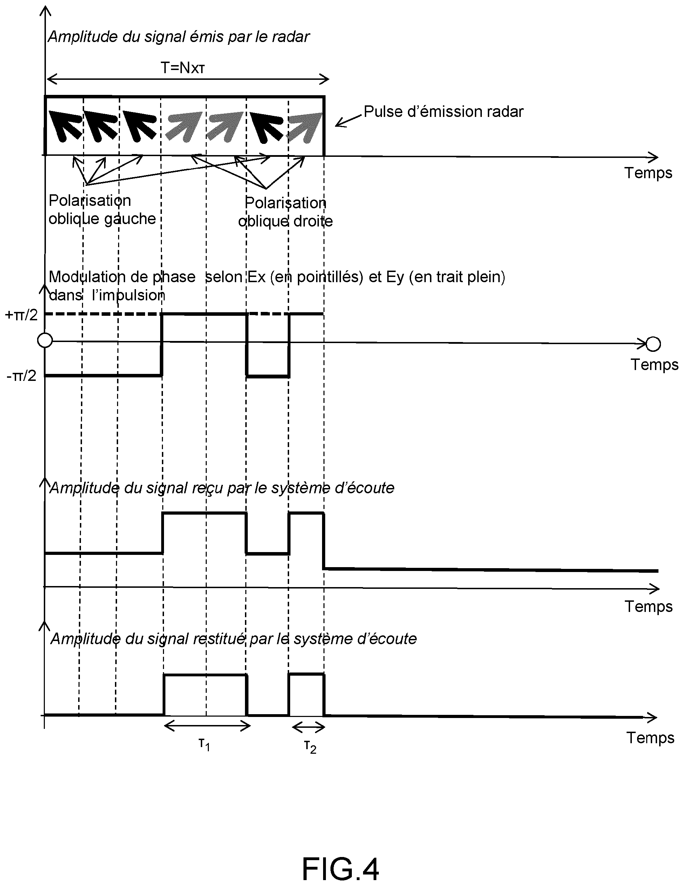

La figure 4 illustre, de la même manière que la figure 3, l'effet, sur un système d'écoute adapté à une seule polarisation oblique, d'une commutation de polarisation, entre une polarisation oblique gauche et une polarisation oblique droite. Ces deux polarisations sont dites orthogonales entre elles car leurs champs électriques résultants sont orientés orthogonalement.

La modulation de polarisation est effectuée en faisant varier la modulation de phase des composantes rectilignes Ex et Ey, générées dans l'élément rayonnant au niveau des accès d'excitation correspondants. En polarisation oblique gauche, la composante rectiligne Ex et la composante rectiligne Ey sont déphasées de ± π, avec la même amplitude. Cette valeur de déphasage peut être obtenue par exemple en appliquant un déphasage de +π/2 à la composante rectiligne Ex, et un déphasage de -π/2 à la composante rectiligne Ey, ou inversement, en appliquant un déphasage de -π/2 à la composante rectiligne Ex, et un déphasage de +π/2 à la composante rectiligne Ey. En polarisation oblique droite, la composante rectiligne Ex et la composante rectiligne Ey sont en phase, avec la même amplitude. Ceci peut être obtenu en appliquant le même déphasage de +π/2 aux deux composantes rectilignes.

Ainsi, pour réaliser à l'émission un code de modulation de polarisation, qu'il s'agisse de commuter entre une polarisation circulaire droite et une polarisation circulaire gauche, ou bien de commuter entre une polarisation oblique droite et une polarisation oblique gauche, il suffit d'alterner le déphasage entre la composante verticale Ey et la composante horizontale Ex, entre deux valeurs fixes, à savoir +π/2 et -π/2 en polarisation circulaire, ou 0 et ±π en polarisation oblique.

Le code de modulation de polarisation illustré dans les figures 3 et 4 est un code de Barker à sept moments. La fonction d'autocorrélation du code de Barker à sept moments fait apparaître un pic d'amplitude égale à sept lorsque le corrélateur est centré. En-dehors du pic, les coefficients de la fonction d'autocorrélation alternent entre 0 et -1. Le calcul de corrélation entre le signal émis et le signal reçu est ainsi facilement réalisé avec un code de Barker à sept moments. Toutefois, un code de Barker ayant un nombre différent de moments peut être utilisé, ainsi que d'autres codes de modulation, tels que le code de Gold, le code de Gray, ou tout autre code de modulation. L'utilisation d'un nombre élevé de moments peut avoir pour conséquence que le système d'écoute va considérer que le signal est un signal aléatoire. Cela peut même amener le système d'écoute à saturer.

Avantageusement, le code de modulation contient, à un moment près, autant de moments pour les polarisations orthogonales ou opposées. Ainsi, en polarisation circulaire, le code de modulation contient autant de moment à polarisation circulaire gauche que de moments à polarisation circulaire droite. En polarisation oblique, le code de modulation contient autant de moment à polarisation oblique gauche que de moments à polarisation oblique droite. Le radar n'a en effet pas de connaissance *a priori* sur la façon dont le système d'écoute est accordé, et l'effet de leurrage est donc maximal.

Selon un mode de réalisation préférentiel, une pluralité d'impulsions est générée et émise par le radar. Le code de polarisation peut être alors modifié d'une impulsion à la suivante. De préférence, le nombre de moments de même polarisation est identique d'une impulsion à l'autre, à un moment près. Ainsi, en mode Doppler, l'amplitude d'un signal réfléchi par une cible donnée reste inchangée de récurrence à récurrence ; il n'y a donc pas d'élargissement Doppler lié à la modulation de la polarisation.

Lors de l'émission d'une séquence d'impulsions, le code de modulation peut être inversé temporellement d'une impulsion à l'autre. Cette technique est de nature à perturber de façon encore plus importante les systèmes d'écoute en modifiant la périodicité des signaux restitués par les systèmes d'écoute. Elle permettrait également de réduire les échos de seconde trace, provenant des échos multiples dus à la récurrence des impulsions, qui seraient atténués par la désadaptation du corrélateur utilisé à la récurrence en cours vis-à-vis de l'impulsion émise à la récurrence précédente.

Il est à noter que le procédé est compatible avec un fonctionnement dans une antenne à balayage électronique. Dans ce cas, le code de phase correspondant à la modulation de polarisation dans l'impulsion est superposé à la commande de phase appliquée pour pointer le faisceau dans une direction donnée. Ainsi, un coefficient de phase distinct est appliqué sur chaque élément rayonnant afin de pointer le faisceau. Le coefficient de phase peut être généré par le module actif radio fréquence d'émission réception. A ce coefficient de phase s'ajoute, sur chaque élément rayonnant, une différence de phase entre les composantes Ex et Ey, afin de moduler la polarisation.

Afin d'améliorer la résolution en distance d'un radar, il est également possible de superposer au code de modulation de polarisation un second code, identique sur composantes Ex et Ey, destiné à réaliser une compression d'impulsion. S'il y a N moments dans le code, avec une durée d'impulsion initialement égale à T, chaque impulsion émise après compression une durée τ = T/N. La compression d'impulsion permet de réduire la puissance crête à l'émission. Le procédé est donc très bien adapté à une intégration sur circuit intégré monolithique hyperfréquence (MMIC), qui ne fonctionne pas avec des puissances crêtes aussi élevées que les radars à tube.

L'invention se rapporte à un dispositif d'émission/réception configuré pour mettre en œuvre le procédé de confusion décrit.

Selon un premier mode de réalisation, non représenté sur les figures, le dispositif d'émission/réception comprend une unique voie de réception adaptée à une polarisation rectiligne correspondant à une des deux composantes de polarisation de la polarisation du signal émis, à savoir la composante Ex ou Ey. La polarisation rectiligne correspondant à la composante Ex est généralement appelée polarisation horizontale. La polarisation rectiligne correspondant à la composante Ey est généralement appelée polarisation verticale. Ainsi, que le radar alterne polarisation circulaire gauche et droite, ou qu'il alterne polarisation oblique gauche et droite, l'atténuation dans la voie de réception ne sera jamais inférieure à -3 dB. La désadaptation est la même pour les deux polarisations pour lesquelles il y a une commutation à l'émission. Le dispositif d'émission/réception selon le premier mode de réalisation ne nécessite qu'une voie de réception. Il n'y a pas besoin de séparer les composantes Ex et Ey à la réception. Le dispositif d'émission/réception est ainsi caractérisé par une simplicité de conception.

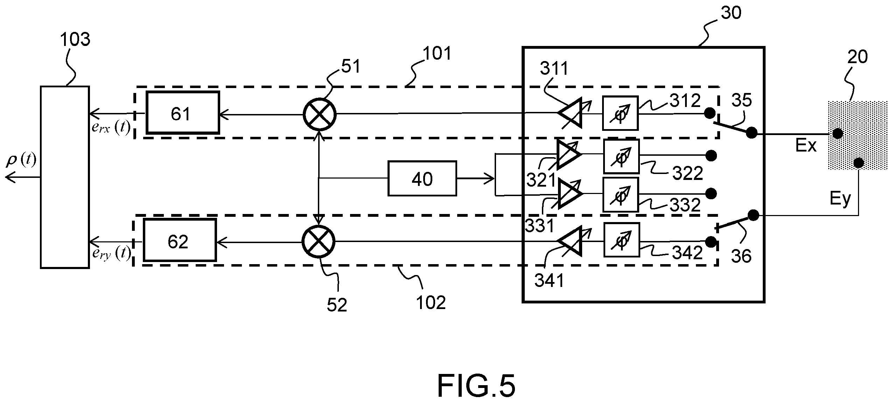

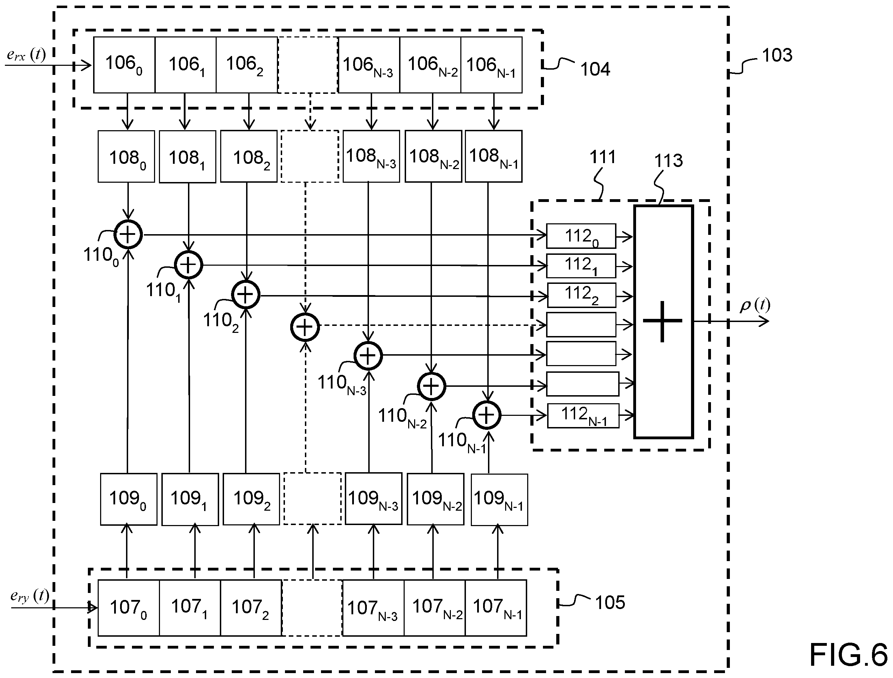

Selon un deuxième mode de réalisation (qui ne relève pas de l'invention mais qui est fourni à titre d'illustration), illustré par les figures 5 et 6, le dispositif d'émission/réception comprend une première voie de réception 101 adaptée à une première polarisation rectiligne correspondant à une première composante Ex de polarisation du signal émis au niveau de l'élément rayonnant 20, et une deuxième voie de réception 102 adaptée à une deuxième polarisation rectiligne correspondant à une deuxième composante Ey de polarisation du signal émis au niveau de l'élément rayonnant 20. Selon le deuxième mode de réalisation, un filtrage adapté au code de modulation est effectué.

Le module actif radio fréquence d'émission réception 30 assure le contrôle d'amplitude et de phase du signal RF d'émission et de réception. Il comprend un commutateur 35 dédié à la composante Ex, et un commutateur 36 dédié à la composante Ey. Chacun des commutateurs 35, 36 permet de commuter entre émission et réception.

Pour la modulation de la polarisation à l'émission, des moyens de déphasage (322, 332) permettent d'appliquer un déphasage relatif entre les composantes Ex et Ey, et donc de générer des polarisations obliques ou circulaires. Les moyens de déphasage en émission (322, 332) sont par ailleurs configurés pour alterner le déphasage entre les composantes Ex et Ey, afin de générer une alternance entre polarisation circulaire gauche et polarisation circulaire droite, ou bien une alternance entre polarisation oblique gauche et polarisation oblique droite. Des moyens de déphasage en réception (312, 342) permettent d'appliquer une phase, identique selon les deux composantes Ex et Ey, au signal reçu dans le cadre d'une antenne à balayage électronique. Les moyens de déphasage en émission (322, 332) permettent également d'appliquer une phase identique selon les deux composantes Ex et Ey, en plus du déphasage lié à la modulation de polarisation. Des moyens d'amplification variable en réception, par exemple des amplificateurs faible bruit (311, 341) sont disposés dans chacune des voies de réception (101, 102). Des moyens d'amplification variable en émission (321, 331), par exemple des amplificateurs haute puissance, sont disposés dans les voies d'émission. Les moyens d'amplification variable en émission (321, 331) peuvent par ailleurs être configurés pour appliquer à l'émission des amplitudes différentes sur les composantes Ex et Ey ; au lieu de rayonner selon une polarisation circulaire, le rayonnement serait effectué avec une polarisation elliptique. La modulation aurait ainsi deux degrés de liberté, à savoir en phase et en amplitude, ce qui contribuerait à leurrer le système d'écoute.

Un oscillateur local 40 génère une onde stable en fréquence qui est mélangée avec les signaux de réception selon chacune des composantes Ex et Ey, pour le descendre à une fréquence intermédiaire. Les mélangeurs (51, 52) combinent les signaux des composantes Ex et Ey, éventuellement amplifiés et déphasés, à l'onde produite par l'oscillateur local. Les signaux reçus sont ainsi ramenés à une fréquence intermédiaire, puis numérisés, par des convertisseurs analogique-numérique (61, 62).

Sur chaque voie de réception, avant d'être numérisé par un convertisseur analogique/numérique (61, 62) le signal peut être décomposé en deux canaux temporels orthogonaux, dénommés habituellement I et Q. La décomposition permet de gagner 3 dB sur le rapport signal à bruit. Cette décomposition peut aussi être réalisé après l'étape de codage analogique/numérique, par un détecteur amplitude phase numérique, connu par l'homme du métier sous l'appellation DAP numérique.

Enfin, les signaux issus des deux voies de réception (101, 102) sont numérisés puis transmis au corrélateur 103, commun à la première voie de réception 101 et à la deuxième voie de réception 102, et qui assure à la fois un filtrage adapté à la modulation de la polarisation émise et à l'impulsion.

Le corrélateur 103 est illustré en détail à la figure 6. Il s'apparente à un corrélateur de radar à compression d'impulsion adapté à un code de phase.

eᵣₓ(t) représente la composante du champ électrique Ex reçu à l'instant t. e_{ry}(t) représente la composante du champ électrique Ey reçu à l'instant t.

Le corrélateur 103 comprend un premier registre à décalage 104 composé de cellules à retard (106₀, ..., 106_{N-1}) appliquées à la première voie de réception 101, et un deuxième registre à décalage 105 composé de cellules à retard (107₀, ..., 107_{N-1}) appliquées à la deuxième voie de réception 102. Le nombre de cellules à retard de chaque registre à décalage est égal au nombre N de moments du code de modulation. Chacune des cellules à retard applique une fonction retard de Laplace, avec un pas d'échantillonnage τ.

Une première série de N cellules de compensation de phase (108₀, ..., 108_{N-1}) est couplée au premier registre à décalage 104. Chaque cellule de compensation de phase (108₀, ..., 108_{N-1}) de la première série est connectée à une cellule à retard (106₀, ..., 106_{N-1}) du premier registre à décalage (104), et configurée pour moduler un échantillon enregistré dans la cellule à retard par une phase identique ou conjuguée par rapport à la phase du moment de même rang du code de modulation appliqué à la première composante de polarisation. Une deuxième série de N cellules de compensation de phase (109₀, ..., 109_{N-1}) est couplée au deuxième registre à décalage 105. Chaque cellule de compensation de phase (109₀, ..., 109_{N-1}) de la deuxième série est connectée à une cellule à retard (107₀, ..., 107_{N-1}) du deuxième registre à décalage (105), et configurée pour moduler un échantillon enregistré dans la cellule à retard par une phase identique ou conjuguée par rapport à la phase du moment de même rang du code de modulation appliqué à la deuxième composante de polarisation.

La sélection de la modulation par une phase identique ou conjuguée par rapport à la phase du moment de même rang du code de modulation appliqué à la première et à la deuxième composante de polarisation est effectuée de façon à disposer, lorsque le corrélateur est adapté au signal reçu, d'une suite de N échantillons successifs, correspondant à une polarisation résultante émission/réception unique et constante dans l'impulsion, par exemple circulaire gauche, circulaire droite, oblique gauche ou oblique droite.

Les sept cellules de compensation de phase modulent en réception les échantillons de la composante du champ électrique Ex et de la composante du champ électrique Ey de façon à avoir une différence de phase constante dans l'impulsion de réception égale à -π/2 pour une polarisation circulaire droite, ou une différence de phase constante dans l'impulsion de réception égale à +π/2 pour une polarisation circulaire gauche. De la même manière, les sept cellules de compensation de phase modulent en réception les échantillons de la composante du champ électrique Ex et de la composante du champ électrique Ey de façon à avoir une différence de phase constamment nulle dans l'impulsion de réception pour une polarisation oblique droite, ou une différence de phase constante dans l'impulsion de réception égale à ±π pour une polarisation oblique gauche

Ainsi, en sortie des cellules compensation de phase, les signaux sont remis en phase.

Le corrélateur 103 comprend également un ensemble de sommateurs (110₀, ..., 110_{N-1}). Le sommateur 110₀ additionne les signaux issus de la cellule de compensation de phase 108₀ et de la cellule de compensation de phase 109₀. Plus généralement, chaque sommateur (110₀, ..., 110_{N-1}) est couplé à une cellule de compensation de phase (108₀, ..., 108_{N-1}) de la première série et à une cellule de compensation de phase (109₀, ..., 109_{N-1}) de la deuxième série de même rang, et additionne les signaux issus des cellules auxquelles il est couplé. Par « même rang », on entend même moment, compris entre 0 et N-1, selon le code de modulation de la polarisation.

Un circuit de convolution 111 est configuré pour convoluer chacun des signaux issus des sommateurs (110₀, ..., 110_{N-1}) avec une réplique temporelle de l'impulsion du signal émis, qui est une fonction sinusoïdale à la pulsation ω₀ échantillonnée sur N points espacés de τ, dont la durée est égale à la longueur de l'impulsion émise. Pour cela, les signaux issus des sommateurs (110₀, ..., 110_{N-1}) sont retardés, par des cellules (112, ..., 112_{N-1}) avec un retard (0, τ, 2τ, ..., (N-1)τ), correspondant à leur instant d'apparition dans les registres à décalage (104, 105), puis additionnés dans un sommateur commun 113, pour en déduire la fonction d'autocorrélation *ρ*(*t*). Un pic d'autocorrélation entre le signal d'émission et le signal de réception apparaît lorsque l'impulsion est centrée dans le corrélateur 103. Cette dernière opération correspond à une transformée de Fourier numérique, DFT (Digital Fourier Transform) ou FFT (Fast Fourier Transform).

Ainsi, les échantillons de signaux reçus après sommation des deux voies de réception sont identiques à ceux qui auraient étés reçus pour une polarisation donnée, sans modulation de polarisation à l'émission. Le bilan radar est inchangé.

En réalisant en réception un filtrage adapté au code de polarisation émis, le traitement radar s'effectue avec peu de pertes vis-à-vis d'un fonctionnement sans agilité de polarisation. Ce procédé est donc particulièrement intéressant, puisqu'il permet de leurrer les systèmes d'écoute, sans altérer les performances du radar lui-même.

L'invention est particulièrement adaptée à une mise en œuvre par un radar du procédé selon l'invention. Elle pourrait également être appliquée à un procédé de télécommunication entre un émetteur et un récepteur : l'émetteur module la polarisation à l'émission selon un code prédéterminé auquel le récepteur a accès. A la réception, le récepteur effectue un filtrage adapté à la modulation de la polarisation. Les systèmes d'écoute, qui n'ont pas accès au code de modulation, considèreraient comme du bruit les signaux pour lesquels leur polarisation est désadaptée.

## Revendications

1. Dispositif d'émission/réception configuré pour mettre en œuvre un procédé de confusion de la signature électronique d'un signal émis par un radar, comprenant la génération par le radar d'au moins une impulsion, le procédé comprenant une étape de modulation, dans l'impulsion, de la polarisation du signal émis, selon deux polarisations orthogonales ou opposées, la modulation de la polarisation étant réalisée selon un code de modulation prédéterminé **caractérisé en ce que** le dispositif d'émission/réception comprend une unique voie de réception adaptée à une polarisation rectiligne correspondant à une des deux composantes de polarisation de la polarisation du signal émis.

2. Dispositif selon la revendication 1, dans lequel le code de modulation est configuré pour faire passer alternativement la polarisation de circulaire gauche à circulaire droite.

3. Dispositif selon la revendication 1, dans lequel le code de modulation est configuré pour faire passer alternativement la polarisation de linéaire oblique gauche à linéaire oblique droite.

4. Dispositif selon l'une des revendications précédentes, dans lequel le code de modulation comprend, à un moment près, autant de moments pour les deux polarisations orthogonales ou opposées.

5. Dispositif selon l'une des revendications précédentes, dans lequel le code de modulation est un code de Barker à sept moments.

6. Dispositif selon l'une des revendications précédentes, configuré pour générer une pluralité d'impulsions, le code de modulation étant inversé temporellement d'une impulsion à la suivante.

7. Antenne comportant une pluralité de dispositifs selon l'une des revendications précédentes, l'antenne étant du type à balayage électronique.

8. Procédé de confusion de la signature électronique d'un signal émis par un radar, **caractérisé par** l'utilisation du dispositif des revendications 1 à 6.

## Patentansprüche

1. Sende-/Empfangsvorrichtung konfiguriert zum Umsetzen eines Verfahrens zur Störung der elektronischen Signatur eines durch einen Radar gesendeten Signals, umfassend die Erzeugung, durch den Radar, mindestens eines Impulses, wobei das Verfahren einen Schritt des Modulierens, in dem Impuls, der Polarisation des gesendeten Signals umfasst, gemäß zwei Polarisationen, welche rechtwinklig oder entgegengesetzt sind, wobei die Modulation der Polarisation gemäß einem vorbestimmten Modulations-Code erfolgt, **dadurch gekennzeichnet, dass** die Sende-/Empfangsvorrichtung einen einzigen Empfangskanal umfasst, welcher auf eine geradlinige Polarisation angepasst ist, welche einer der beiden Polarisationskomponenten der Polarisation des gesendeten Signals entspricht.

2. Vorrichtung nach Anspruch 1, wobei der Modulations-Code konfiguriert ist, um abwechselnd die Polarisation von zirkular nach links auf zirkular nach rechts umzustellen.

3. Vorrichtung nach Anspruch 1, wobei der Modulations-Code konfiguriert ist, um abwechselnd die Polarisation von geradlinig schräg nach links auf geradlinig schräg nach rechts umzustellen.

4. Vorrichtung nach einem der vorhergehenden Ansprüche, wobei der Modulations-Code auf einen Moment genau ebenso viele Momente für die beiden rechtwinkligen oder entgegengesetzten Polarisationen umfasst.

5. Vorrichtung nach einem der vorhergehenden Ansprüche, wobei der Modulations-Code ein Barker-Code mit sieben Momenten ist.

6. Vorrichtung nach einem der vorhergehenden Ansprüche, welche konfiguriert ist, um eine Vielzahl von Impulsen zu erzeugen, wobei der Modulations-Code zeitabhängig von einem Impuls zum nächsten umgekehrt wird.

7. Antenne, umfassend eine Vielzahl von Vorrichtungen nach einem der vorhergehenden Ansprüche, wobei die Antenne eine Antenne vom Typ mit elektronischer Abtastung ist.

8. Verfahren zur Störung der elektronischen Signatur eines durch einen Radar gesendeten Signals, **gekennzeichnet durch** die Verwendung der Vorrichtung nach den Ansprüchen 1 bis 6.

## Claims

1. Transmitting/receiving device configured to implement a method for confusing the electronic signature of a signal transmitted by a radar, comprising the generation by the radar of at least one pulse, the method comprising a step of modulation, in the pulse, of the polarization of the transmitted signal, according to two orthogonal or opposite polarizations, the modulation of the polarization being performed according to a predetermined modulation code **characterised in that** the transmission/reception device comprises a single reception path adapted to a rectilinear polarization corresponding to one of the two polarization components of the polarization of the transmitted signal.

2. Device according to claim 1, wherein the modulation code is configured to alternately switch the polarization from left-hand circular to right-hand circular.

3. Device according to claim 1, wherein the modulation code is configured to alternately switch the polarization from left-hand oblique linear to right-hand oblique linear.

4. Device according to one of the preceding claims, wherein the modulation code comprises, to within one moment, as many moments for both orthogonal or opposite polarizations.

5. Device according to one of the preceding claims, wherein the modulation code is a seven-moment Barker code.

6. Device according to one of the preceding claims, configured to generate a plurality of pulses, the modulation code being temporally inverted from one pulse to the next.

7. Antenna comprising a plurality of devices according to any of the preceding claims, the antenna being of the electronic scanning type.

8. Method for confusing the electronic signature of a signal transmitted by a radar, **characterised by** the use of the device according to claims 1 to 6.
